(19) Europäisches Patentamt
European Patent Office
Office européen des brevets

(11) EP 4 232 292 B1

(12) # EUROPEAN PATENT SPECIFICATION

(45) Date of publication and mention of the grant of the patent:
**27.11.2024 Bulletin 2024/48**

(21) Application number: **21794139.2**

(22) Date of filing: **15.10.2021**

(51) International Patent Classification (IPC):
***B41J 2/16*** *(2006.01)* ***C08L 9/02*** *(2006.01)*
***C08L 9/06*** *(2006.01)* ***C08L 15/00*** *(2006.01)*
***C08L 51/00*** *(2006.01)* ***C09J 115/00*** *(2006.01)*
***C08L 9/00*** *(2006.01)* ***C08L 13/00*** *(2006.01)*

(52) Cooperative Patent Classification (CPC):
(C-Sets available)
**B41J 2/1623; B41J 2/16; C08L 9/00; C08L 9/06; C08L 13/00; C08L 51/00; C09J 115/00** (Cont.)

(86) International application number:
**PCT/EP2021/078614**

(87) International publication number:
**WO 2022/084183 (28.04.2022 Gazette 2022/17)**

(54) **SOLVENT RESISTANT ELASTOMERIC GLUE FOR INK JET PRINTHEAD**

LÖSUNGSMITTELBESTÄNDIGER ELASTOMERER KLEBSTOFF FÜR TINTENSTRAHLDRUCKKOPF

COLLE ÉLASTOMÈRE RÉSISTANT AUX SOLVANTS POUR TÊTE D'IMPRESSION À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2020 EP 20203024**

(43) Date of publication of application:
**30.08.2023 Bulletin 2023/35**

(73) Proprietor: **SICPA HOLDING SA**
**1008 Prilly (CH)**

(72) Inventor: **CIAMPINI, Davide**
**10018 Pavone Canavese (IT)**

(74) Representative: **GatesIP**
**Dorfplatz 1**
**6060 Sarnen (CH)**

(56) References cited:
**EP-A1- 2 045 102**
**US-A- 4 036 804**
**US-A1- 2004 066 433**
**US-A1- 2004 266 944**
**US-A1- 2009 213 195**
**US-A1- 2012 136 129**
**US-A1- 2016 108 154**
**US-A1- 2016 159 992**
**US-A1- 2017 174 001**
**US-A1- 2017 298 159**
**US-A1- 2020 148 863**
**US-B1- 9 399 313**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 115/00, C08L 9/06, C08K 3/22, C08K 5/09, C08K 5/38, C08K 3/06, C08K 5/5415, C08K 3/34**

## Description

### FIELD OF THE INVENTION

The present invention relates to the field of thermal ink jet printhead technology; and in particular, relates to an elastomeric glue, a method for preparing the elastomeric glue, and use of the elastomeric glue for ink jet printheads.

### BACKGROUND OF THE INVENTION

A typical inkjet printhead cartridge in the prior art as described, for example, in the patent EP 1896262 B1 (see figure 1 therein), is made of a printhead ejection assembly constituted by a printhead chip bonded to a flexible printed circuit. The printhead chip houses the electrical and hydraulic components to address the ink towards the various ejecting sites, energizing it on demand, to produce ink droplets for printing. A nozzle plate is applied on the top surface of the chip, to provide the nozzles for ink ejection. The whole ejection assembly is in turn bonded to a cartridge, that contains the ink reservoir, closed by a lid. Suitable ink slots are obtained in the cartridge body, to allow the ink to get the printhead chip and to arrive to the microfluidic circuit, either through the slots machined into the chip or from the chip edge, depending on the printhead layout. In a multiple ink printhead cartridge, there are of course multiple ink reservoirs and multiple ink paths towards the printhead and they are hydraulically insulated each other, to prevent inks from mixing. Since the cartridge is made assembling different parts and materials, the joints between the parts must ensure not only a good bonding, but also a perfect and long-lasting ink sealing in the regions that are in contact with the ink. To bond the chip with the cartridge body, a suitable glue could be dispensed onto the flat surface around the flow paths in the cartridge body, to ensure also a good sealing around the lower surface of the slots in the chip. In such a way, the inks can flow from the reservoir towards the chip, without any mixing or leakage.

Moreover, the cartridge body of a multiple inks printhead requires a special manufacturing process: for example, in a three inks cartridge with parallel nozzle arrays, the casting techniques don't allow to get a piece at once with a single molding process. As shown in figure 2 of the patent EP 1896262 B1, the cartridge body has three ink reservoirs, separated by the walls. Due to the small lateral distance between the different color nozzle arrays, it is not possible to produce three separate straight ink paths, maintaining the necessary hydraulic characteristics and the suitable structure robustness. A possible solution is using a more complex mold as described, for example, in the patent EP 1896262 B1, where two additional parallel slide inserts are used, to produce the desired fluidic structure inside the cartridge body. Once completed the casting process, the extraction of the two slide inserts leaves two windows open in the side surface of the cartridge body: these windows must be closed with suitable plugs, conveniently bonded to the cartridge. A possible way to bond the plugs is to use a glue material, dispensed along the flat recessed surface of the window boundary, to ensure the tight sealing of the openings, without allowing the ink to leak out from the reservoir.

Document US 2017/174001 A1 discloses vulcanized rubber compositions on butadiene-styrene basis for tire industry. However, the process and especially the vulcanization for preparing these rubbers differs from the present method. There is no teaching for elastomeric glues and their use in inkjet printheads for bonding parts therein.

Thus, a suitable glue is required for a typical printhead cartridge to bond the chip to the cartridge body and to bond the plugs to the reservoir. Traditionally, the glue used in the printhead loaded with water-based ink is a type of monocomponent epoxy-based glue, like Ecobond E3200 (Henkel). This type of monocomponent epoxy-based glue guarantees a solid adhesion of the silicon chip to the plastic reservoir of the printhead. However, when solvent-based inks are used, such type of monocomponent epoxy-based glue, widely tested for the ink jet application, shows severe failures. For example, the adhesion of the glue is weakened because of the chemical action of the solvent, and the printhead shall undergo electrical failures during its life as a consequence of swelling of the glue under solvent action. Another critical aspect is the low flexibility of the epoxy-based glue, so that the thermal stresses during manufacturing process and shelf life of the printhead could damage the brittle silicon chip parts.

Therefore, there is an urgent need in the art to develop a special elastomeric glue, which guarantees the desired chemical resistance in a solvent environment once cured and at the same time high flexibility. Also required for the elastomeric glue comprises: good adhesion to surfaces like polyolefins, silicon, Kapton, thermoplastic adhesives; dispensability by means of pneumatic or cochlea deposition systems; proper thixotropy; good visibility of the glue, once dispensed, by means of optical detection systems; time/temperature curing conditions compatible to the other parts of the printhead; most preferred monocomponent systems; low Young modulus in order to reduce mechanical stresses between the bonded parts of the device during manufacturing process and during the life of the good; and/or reduced air permeability.

### SUMMARY OF THE INVENTION

In order to solve the above technical problems, the present invention proposes a novel elastomeric glue. The

elastomeric glue has the proper thixotropy and viscosity, and consequently, good dispensability by means of pneumatic or cochlea systems. The new glue exhibits the desired shape once dispensed on the surface to be bonded, minimizing undesired draining effects during the curing temperature which shall be compatible with the parts of the printhead and with the manufacturing lines.

As a first aspect of the present invention, provided is a method for preparing an elastomeric glue for bonding parts inside an inkjet printhead from a composition comprising:

- linear, unsaturated hydrocarbon based polymers comprising at least one non-aromatic unsaturation in at least one monomer, wherein the linear, unsaturated hydrocarbon based polymers comprise polyisoprene graft maleic anhydride and polybutadiene-styrene;
- one or more sulfur donor molecules; and
- an organometallic zinc catalyst,
  the method comprising the steps of

  a) reacting the one or more sulfur donor molecules with the organometallic zinc catalyst to form a sulfurized zinc complex as an active cross-linking initiator;
  b) catalyzing vulcanization reaction of the one or more linear, unsaturated hydrocarbon based polymers with the sulfurized zinc complex to obtain vulcanized polymers and thiols;
  c) crosslinking the polymeric chains of the vulcanized polymers obtained in step b) via polysulfidic bridges between units through a curing process.

As a second aspect of the present invention, provided is an elastomeric glue, prepared by the method according to the first aspect of the present invention.

As a third aspect of the present invention, provided is an inkjet printhead, comprising the elastomeric glue prepared by the method according to the first aspect of the present invention.

As a fourth aspect of the present invention, provided is use of the elastomeric glue prepared by the method according to the first aspect of the present invention for bonding parts inside an inkjet printhead.

The elastomeric glue of the present invention has the following advantageous technical effects. The elastomeric glue of the present invention allows to make a solvent resistant inkjet printhead, and is capable of tightly bonding parts inside the inkjet printhead, e.g, bonding the chip (e.g., the silicon chip) to a hydraulic part of the reservoir (e.g., the plastic polyolefin based reservoir) of the cartridge body, and bonding the plugs to the reservoir. Accordingly, the inkjet printhead comprising the elastomeric glue of the present invention is resistant to both traditional solvent based inks and UV curable inks, and is capable of being printed on porous and not porous surfaces.

## BRIEF DESCRIPTION OF THE DRAWINGS

Non-restrictive and non-exhaustive embodiments of the present invention will be described by examples referring to the drawings below, wherein:

FIG. 1 illustrates a schematic diagram of a heat blower for curing of the hydraulic glue of the inkjet printhead.

## DETAILED DESCRIPTION OF THE EMBODIMENTS

In order to make the above and other features and advantages of the invention clearer, the invention is further described in combination with the attached drawings below. It is to be understood that the specific embodiments of the present invention are illustrative and not intended to be restrictive.

As a first aspect of the present invention, provided is a method for preparing an elastomeric glue for bonding parts inside an inkjet printhead from a composition comprising:

- linear, unsaturated hydrocarbon based polymers comprising at least one non-aromatic unsaturation in at least one monomer, wherein the linear, unsaturated hydrocarbon based polymers comprise polyisoprene graft maleic anhydride and polybutadiene-styrene;
- one or more sulfur donor molecules; and
- an organometallic zinc catalyst,
  the method comprising the steps of

  a) reacting the one or more sulfur donor molecules with the organometallic zinc catalyst to form a sulfurized zinc complex as an active cross-linking initiator;
  b) catalyzing vulcanization reaction of the one or more linear, unsaturated hydrocarbon based polymers with

the sulfurized zinc complex to obtain vulcanized polymers and thiols;
c) crosslinking the polymeric chains of the vulcanized polymers obtained in step b) via polysulfidic bridges between units through a curing process.

In a preferred embodiment, the one or more linear, unsaturated hydrocarbon based polymers further comprise one or more covalently bonded polar groups in at least one monomer.
In a preferred embodiment, the organometallic zinc catalyst is zinc carbamates, zinc guanidines, and/or zinc xanthates. The zinc carbamates may be, e.g., zinc ethyl phenyl dithiocarbamate (ZEPC), and/or zinc dibutyl dithiocarbamate (ZDBC).
In one embodiment, the composition comprises:

- 15%-60% of the one or more linear, unsaturated hydrocarbon based polymers;
- 3.3%-10.6% of the one or more sulfur donor molecules; and
- 2.0%-7.0% of the organometallic zinc catalyst;

wherein the percentage is calculated based on the total weight of the composition.
In a preferred embodiment, the composition comprises:

- 20%-50% of the one or more linear, unsaturated hydrocarbon based polymers;
- 5.0%-8.5% of the one or more sulfur donor molecules; and
- 3.0%-6.0% of the organometallic zinc catalyst;

wherein the percentage is calculated based on the total weight of the composition.
In a more preferred embodiment, composition comprises:

- 35%-40% of the one or more linear, unsaturated hydrocarbon based polymers;
- 6.5%-7.5% of the one or more sulfur donor molecules; and
- 4.0%-5.0% of the organometallic zinc catalyst;

wherein the percentage is calculated based on the total weight of the composition.

**Linear, unsaturated hydrocarbon based polymers**

As mentioned above, the composition of the present invention comprises one or more linear, unsaturated hydrocarbon based polymers comprising at least one non-aromatic unsaturation in at least one monomer. The unsaturation is the reactive site (in particular the allylic hydrogen) during the vulcanization reaction of the linear, unsaturated hydrocarbon based polymers. During the vulcanization reaction, the allylic hydrogen is replaced by a sulfur atom (substitution reaction) of a polysulfidic chain which is coming from the zinc catalyst once sulfurized.
In a preferred embodiment, the linear, unsaturated hydrocarbon based polymers further comprise one or more covalently bonded polar groups, such as alcoholics, ketones, esters, amides, carboxylics, amines, anhydrides, in at least one monomer, for covalently bonding. The presence of the one or more covalently bonded polar groups in the polymeric chains increases the surface interactions and consequently enhances the adhesion.
In a more preferred embodiment, the polar group is anhydrides. The anhydrides, for example, are a functional group which reacts towards hydroxyl or amino or carboxylic groups which are eventually present onto the surfaces to be bonded, undergoing a nucleophilic substitution reaction. The new bond generated between the polymer and the surface due to the anhydrides is a strong covalent bond. Without wishing to be bound by theory, the anhydrides could also develop weaker interactions with other functional groups, such as dipole-dipole or Van der Walls interactions.
In a preferred embodiment, the one or more linear, unsaturated hydrocarbon based polymers of the present invention also comprise inside of the chain aromatic fractions which improve the final mechanical properties and the chemical resistance of the glue.
In an exemplified embodiment, the one or more linear, unsaturated hydrocarbon based polymers comprise one of the following:

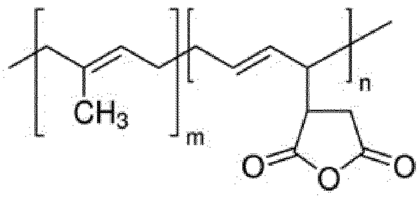,

wherein m + n is equal to 113, and none of m and n is equal to zero,

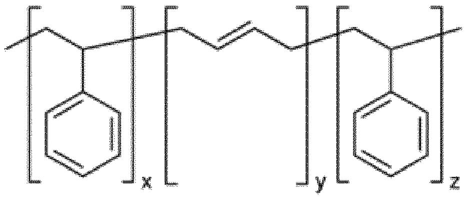,

wherein (x + z) / (x + y + z) is equal to 20% and y / (x + y + z) is equal to 80%, and

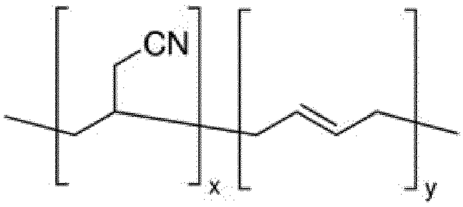,

wherein x / (x + y) is equal to 33% and y / (x + y) is equal to 67%.

In a particular embodiment, the linear, unsaturated hydrocarbon based polymers comprise polyisoprene graft maleic anhydride and/or polybutadiene-styrene, commercially available from ALDRICH.

## Sulfur donor molecules

As mentioned above, the composition of the present invention comprises one or more sulfur donor molecules. The one or more sulfur donor molecules are a mandatory ingredient for sulfur-based vulcanization reaction. They react towards the organometallic zinc catalyst (discussed in detail below) generating an active sulfurized zinc complex, which effectively starts the crosslinking reaction of the linear, unsaturated hydrocarbon based polymer chains.

In one embodiment, the one or more sulfur donor molecules are selected from elementary sulfur or dispersed sulfur. The elementary sulfur or dispersed sulfur could be dispersed with a proper polymeric dispersant additive (in general polymers or waxes) in order to increase the uniformity of the dispersion in the case that the solubility is not complete.

In a preferred embodiment, the one or more sulfur donor molecules are a soluble crystalline sulfur having average granulometry not larger than 100 mesh. In this way, the resultant elastomeric glue will have good homogeneity and good dispensability by means of pneumatic or cochlea dispensing systems.

## Organometallic zinc catalyst

The composition of the present invention comprises an organometallic zinc catalyst. The organometallic zinc catalyst is the active compound which firstly reacts with the sulfur donor molecules, generating an active sulfurized zinc complex. The sulfurized zinc complex catalyzes the sulfur substitution reaction of the allylic hydrogen of the linear, unsaturated hydrocarbon based polymers during the vulcanization reaction. As a consequence of the vulcanization reaction, the sulfurized zinc complex is decomposed into some by-products like ZnS and thiols while the polymeric chains are effectively crosslinked via the corresponding long polysulfidic chain.

In one embodiment, the organometallic zinc catalyst may be zinc carbamates, zinc guanidines, and/or zinc xanthates. In a preferred embodiment, the organometallic zinc catalyst is zinc carbamates and/or zinc xanthates, which once introduced into the complete elastomeric glue, are more performant from a point of view of the scorch time, reactivity and curing temperature of the final elastomeric glue.

Examples of the organometallic zinc catalyst suitable for the vulcanization reaction comprises:

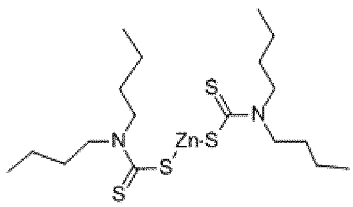
,
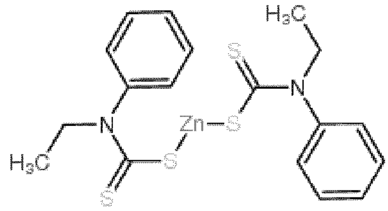
and
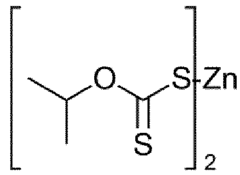
.

In a particular embodiment, the organometallic zinc catalyst is zinc ethyl phenyl dithiocarbamatre (ZEPC) or zinc dibutyl dithiocarbamate (ZDBC), such as those commercially available from Henan Xuannuo Imp & Exp Co., Ltd,, or zinc isopropyl xanthate such as the one commercially available from Vanderbilt under the name PROPYLZITHATE®.

In one embodiment, the composition of the present invention further comprises:

- metal oxides;
- one or more organic ligands;
- one or more hydrocarbon-based organic solvents or oils having a boiling point not lower than the curing temperature of the composition;
- a coupling agent of organosilane molecules having one or more unsaturation; and/or
- an organic or inorganic filler dispersible in the composition.

In a particular embodiment, the composition comprises:

- 1.9%-6.2% of the metal oxides;
- 2.5%-8.5% of the one or more organic ligands;
- 14%-45% of the one or more hydrocarbon-based organic solvents or oils;
- 2.5%-9.0% of the coupling agent; and/or
- 1.5%-12% of the organic or inorganic filler;

wherein the percentage is calculated based on the total weight of the composition.

In a preferred embodiment, the composition comprises:

- 3.0%-5.0% of the metal oxides;
- 4.0%-7.0% of the one or more organic ligands;
- 20%-35% of the one or more hydrocarbon-based organic solvents or oils;
- 4.0%-7.5% of the coupling agent; and/or
- 3.0%-10.0% of the organic or inorganic filler;

wherein the percentage is calculated based on the total weight of the composition.

In a more preferred embodiment, the composition comprises:

- 4.0%-4.5% of the metal oxides;
- 5.0%-5.5% of the one or more organic ligands;
- 25%-30% of the one or more hydrocarbon-based organic solvents or oils;
- 5.5%-6.0% of the coupling agent; and/or
- 5.0%-8.0% of the organic or inorganic filler;

wherein the percentage is calculated based on the total weight of the composition.

## Metal oxides

As mentioned above, the composition of the present invention further comprises metal oxides, and preferably the metal oxides are zinc oxide (ZnO). The metal oxides may be in a form of particles. In this way, the metal oxide particles such as ZnO particles may be dispersed into the composition and react towards the thiols generated from the first sulfurized zinc complex during the vulcanization reaction, and forming a zinc complex.

In a preferred embodiment, the zinc complex is firstly complexed with the organic ligands, sulfurized, and then

participates in the vulcanization reaction and the crosslinking reaction of the polymers.

## Organic ligands

As mentioned above, the composition of the present invention further comprises one or more organic ligands. The organic ligands aim to increase the solubility and dispersibility of zinc-containing materials (e.g., the organometallic zinc catalyst, zinc sulfide complexes and zinc oxide) in the organic apolar composition, so as to avoid over-vulcanization effects due to improper dispersion and/or solubilization. The organic ligands are molecules able to generate coordination complexes with zinc atom of the organometallic zinc catalyst, or with the zinc complex, or with ZnO.

In a preferred embodiment, the organic ligands are carboxylic acids and/or amines having apolar molecular fraction. In a more preferred embodiment, the organic ligands are C18-C30 carboxylic acids, aliphatic amines and/or aromatic amines.

The examples of the one or more organic ligands suitable for the vulcanization reaction of the polymers comprise the following:

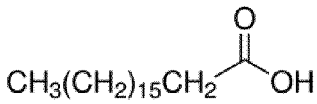
,

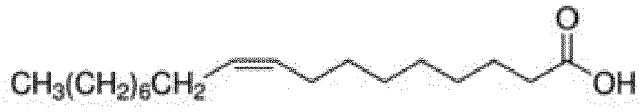
,

and

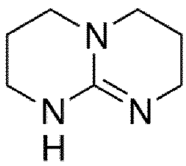
.

## Organic solvents or oils

As mentioned above, the composition of the present invention further comprises one or more hydrocarbon-based organic solvents or oils. The organic solvents or oils are used to solubilize and/or disperse other components of the present composition, and are hydrocarbon-based solvents, e.g., styrene, diisopropylbenzene (DIPB), mesitylene, xylene, nonane, decane, undecane, dodecane, heptane, octane, toluene, and etc. In addition, the selected organic solvents or oils shall have a boiling point not lower than the curing temperature of the composition or saying the present elastomeric glue, to avoid the boiling of the solvents or oils and the generation of bubbles during the curing process. For example, suitable organic solvents or oils for curing temperatures equal to or lower than 130°C comprise mesitylene, xylene, nonane, decane, undecane, dodecane, *etc.*, and suitable organic solvents or oils for curing temperatures equal to or lower than 80°C comprise heptane, octane, toluene and all above mentioned hydrocarbon based solvents.

## Coupling agent

As mentioned above, the composition of the present invention further comprises a coupling agent. The coupling agent, also an adhesion promoter, may be an organosilane molecule, which is soluble in the glue and has reactive functionalities towards such as hydroxyl, amino and/or carboxylic groups which are eventually present onto the surfaces to be bonded (silicon and/or plastic). With such functionalities, the coupling agent or particularly the organosilane molecule is able to react to other components of the glue and to the surfaces both. In a particular embodiment, the reactive functionalities refer to one or more unsaturation contained in the coupling agent or the organosilane molecule.

The coupling agent or particularly the organosilane molecule can vulcanize and react with the rest of the glue, thereby guaranteeing high bonding strength between the elastomeric glue prepared from the composition and the silicon and/or plastic surfaces to be bonded.

The examples of the organosilane molecules suitable for sulfur based vulcanization reaction according to the

present invention comprise one or more of the following:

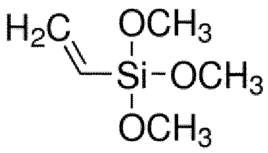, 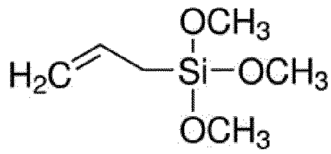, and 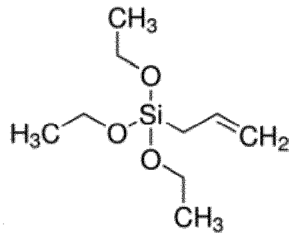.

For example, the organosilane molecule may be Silquest A 171 commercially available from MOMENTIVE.

**Organic or inorganic Filler**

As mentioned above, the composition of the present invention further comprises an organic or inorganic filler dispersible in the composition with or without a dispersant agent. The organic or inorganic filler imparts to the glue the proper viscosity and thixotropy, and consequently good dispensability on the silicon and/or plastic surfaces to be bonded by means of pneumatic and cochlea dispensing systems.

In a preferred embodiment, the organic or inorganic filler has gas and solvent barrier properties and an average granulometry not larger than 50 microns.

The best performances of the glue have been achieved by using a lamellar talc filler which guarantees a good dispersibility in the polymeric matrix and also good solvent/gas barrier properties to the final elastomeric material. Thus, in a more preferred embodiment, the organic or inorganic filler is a lamellar talc filler (e.g. Talc HAR commercially available from IMERYS).

As known to those skilled in the art, each component in the composition described above has peculiar properties and contributes to impart to the glue the proper reactivity and the desired final physical, chemical and mechanical properties.

The composition for preparing the elastomeric glue of the present invention is capable of crosslinking rapidly, and achieving high adhesion to the silicon and/or plastic surfaces to be bonded.

As a second aspect of the present invention, provided is an elastomeric glue, which is prepared from the composition according to the first aspect of the present invention.

The elastomeric glue as prepared is a monocomponent glue so that it is not necessary to mix individual components before use. The glue is used inside of an inkjet printhead as a hydraulic glue, to bond parts of the inkjet printhead, for example, to bond the silicon chip to the plastic polyolefin based reservoir (hydraulic part) and/or bond the plastic plugs to the reservoir. It can also be used to seal a part of the flexible circuit edge, to prevent the ink from flowing under the flexible circuit, which will cause in turn possible chemical and electrical drawbacks.

In addition, the elastomeric glue is able to absorb the stresses induced by the manufacturing process preserving the final good from cracks of the chip during and after the manufacturing process. An eventual heating of the printhead during its life induces different expansions of the bonded materials (silicon and plastic reservoir for example) as a consequence of their thermal dilatation coefficient; this mismatch induces a bending effect of the chip and consequently fractures to the brittle silicon making the printhead unusable. The elasticity of the glue guarantees the adsorption of the stresses induced to the printhead by the manufacturing process or that should occur during the shelf life.

The elastomeric glue is also compatible, once vulcanized, to solvent based inks. These inks could contain alcohols, glycols, glycoethers, ethers, esters, hydrocarbons, amide, lactones, ketones. The glue contains additives studied to impart to the polymer high adhesion to the back of the silicon chip of the printhead and additives which are able to bond the plastic of the reservoir which is generally polyolefin based in order to be compatible to the solvent based inks.

As a third aspect of the present invention, provided is a method for preparing the elastomeric glue according to the second aspect of the present invention from the composition according to the first aspect of the present invention, comprising the steps of

a) reacting the one or more sulfur donor molecules with the organometallic zinc catalyst to form a first sulfurized zinc complex as an active cross-linking initiator;
b) catalyzing vulcanization reaction of the one or more linear, unsaturated hydrocarbon based polymers with the first sulfurized zinc complex to obtain vulcanized polymers and thiols;
c) crosslinking the polymeric chains of the vulcanized polymers obtained in step b) via polysulfidic bridges between units through a curing, preferably thermocuring, process.

As a result, the present elastomeric glue is obtained.

In one embodiment, the method further comprises the step of d) reacting the metal oxides such as zinc oxide with thiols obtained in step b) to form a zinc complex.

In a further embodiment, the zinc complex is complexed with the one or more organic ligands and then sulfurized to obtain a second sulfurized zinc complex. The second sulfurized zinc complex further participates in the vulcanization reaction of the polymers. Accordingly, in the context of the present invention, the addition of metal oxides such as zinc oxide in the glue aims to maximize the use of the byproduct sulfide.

It should be noted that the first sulfurized zinc complex and the second sulfurized zinc complex herein may be identical or similar in terms of the structure.

In one embodiment, the method further comprises the step of e) desulfurizing the polysulfidic bridges by the organometallic zinc catalyst. The step of e) is performed to reduce the length of the cross-linked polymers, and consequently to increase the Young modulus thereof.

In one embodiment, the method further comprises the step of f) vulcanizing the coupling agent having one or more unsaturation to participate in the step c).

In a preferred embodiment, the steps of d), e) and f) are not sequenced.

In a preferred embodiment, the step of c) crosslinking the polymeric chains of the vulcanized polymers in step b) via polysulfidic bridges between the units through a thermocuring process.

As a fourth aspect of the present invention, provided is an inkjet printhead, comprising the elastomeric glue according to the second aspect of the present invention, or prepared from the composition according to the first aspect of the present invention, or prepared from the method according to the third aspect of the present invention.

As a fifth aspect of the present invention, provided is use of the elastomeric glue according to the second aspect of the present invention, or prepared from the composition according to the first aspect of the present invention, or prepared from the method according to the third aspect of the present invention for bonding parts inside an inkjet printhead.

For example, the elastomeric glue of the present invention can be used inside the inkjet printhead as a hydraulic glue to bond the chip to the reservoir, and/or bond plugs to the reservoir. It is also used to seal a part of the flexible circuit edge, to prevent the ink from flowing under the flexible circuit, causing in turn possible chemical and electrical drawbacks.

## Glue Curing

As mentioned above, the elastomeric glue of the present invention is thermally curable. Thus, to thermally cure the present elastomeric glue, curing systems are utilized in the present application. The curing systems typically used in an automated manufacturing assembly line of an inkjet printhead comprise a heat blower and/or an oven.

## Heat blower

FIG. 1 illustrates a heat blower system, which induces a thermal reticulation of the glue via heating the silicon ejector group of an inkjet printhead.

As shown in FIG. 1, the heating is rapidly transferred through the silicon to the glue. The heat blower system allows the manufacturing process to reach higher curing temperatures (compatible to the silicon part of the ejector group) for relatively low time that is necessary to have a complete curing of the glue, without damaging any other thermally sensible parts of an inkjet printhead. The time and temperature of the heat blower may be tuned in order to preserve the plastic reservoir and the parts near printhead from thermal damaging due to the heat transfer.

## Oven

When an oven is used as a curing system, the whole printhead is put into a hot oven at a temperature for a certain time. In this case, the heating is not directional and consequently all the printhead parts are heated.

It is important to avoid reaching temperatures higher than the critical temperatures that could be dangerous for at least one parts of the printhead. In the oven, it is possible to heat in parallel more than one printhead at a time, so the heating time could be higher than the one needed with the heat blower.

The curing conditions and consequently the reactivity of the glue shall be compatible to the application preserving all the other parts of the printhead from a thermally induced damage. For example, when the maximum curing temperature, above which at least one parts of the printhead starts to be damaged, is 90°C, it would be better to introduce the whole printhead into an oven at a temperature lower than 90°C, once the parts of the printhead are bonded; otherwise, it would also an option to introduce a heat blower in the production lines in order to heat locally on the silicon and/or plastic surfaces to be bonded to higher temperatures (e.g., till to about 130°C) for a short time (e.g., < 3 minutes) without damage the final printhead.

The reticulation degree reached after the curing process shall be high. The enthalpy consumed during the curing process, measured by means of DSC instrument, shall be higher than 50% of the total available enthalpy.

## Examples

The features of the elastomeric glue according to the present invention are evaluated in the following examples. It will be understood by those of ordinary skill in the art that the examples described below are only exemplary to illustrate the embodiments of the present invention, without any limitation.

## Examples E1-E4 and comparative examples C5-C6

Table 1 illustrates the exemplary glue compositions (by weight) of the present invention (E1-E4) and the comparative examples (C5-C6).

Table 1. The exemplary glue compositions (by weight) of the present invention and the comparative examples.

| Formulations | | E1 | E2 | E3 | E4 | C5 | C6 |
|---|---|---|---|---|---|---|---|
| Polymers | Polyisoprene graft maleic anhydride | 20% | 20% | 20.6% | 20.6% | 21.31% | 20.47% |
| | polybutadiene-styrene | 17% | 17% | 17.5% | 17.5% | 19.54% | 17.41% |
| Metal Oxide | ZnO | 4% | 4% | 4.12% | 4.12% | 4.73% | 4.1% |
| Ligand | Stearic acid | 5.32% | 5.32% | 5.48% | 5.48% | | 5.44% |
| | 1,3,4,6,7,8-Hexahydro-2H-pyrimido[1,2-a]pyrimidine | | | | | 5.78% | |
| Catalyst | ZEPC | | 4.48% | | 4.62% | | |
| | ZDBC | | | 4.62% | | - | |
| | PROPYLZITHATE® | 4.48% | | | | | 0.77% |
| Sulfur | Sulfur mesh 100 | 6.88% | 6.88% | 7.09% | 7.09% | 7.2% | 7% |
| | 2-Mercaptobenzothiazole | | | | | | 1.53% |
| Filler | Talc HAR | 8% | 8% | 5.16% | 5.16% | - | 8.18% |
| Solvents | Mesitylene | 28.71% | 28.71% | 29.65% | | 35.55% | 29.36% |
| | 1,3-Diisopropylbenzene | | | | 29.65% | | |
| Coupling agent | Silquest A 171 | 5.61% | 5.61% | 5.78% | 5.78% | 5.89% | 5.74% |

## Preparation process for the elastomeric glues of the present invention

Taking formulation E3 as an example, the elastomeric glue according to the present invention was produced by the following process.

The following raw materials were firstly introduced in a container: 20.6 wt% polyysoprene graft maleic anhydride, 17.5 wt% polybutadiene-styrene, 29.65 wt% mesitylene and 5.78 wt% Silquest A171. The raw materials were mixed with a mixer (ARE-250THINKY, USA) for 9 cycles (10 min for each cycle) with 5 min stop after 3 cycles. After the resulting mixture was cooled, 4.12 wt % zinc oxide, 5.48 wt% stearic acid, 7.09 wt% sulfur (mesh 150um) and 5.16 wt% Talc HAR were introduced into the mixture, and then further mixed with a mixer (ARE-250 THINKY, USA) for 3 cycles (10 min each cycle) with 5 min stop after every single one cycle. Finally, 4.62 wt% ZDBC as a Zinc catalyst was introduced into the mixture and mixed with a mixer (ARE-250 THINKY, USA) for 10 min.

Other elastomeric glues according to the present invention and those comparative glues were prepared in a similar manner.

The developed glues were cured with a maximum temperature of 135°C for a time equal to or lower than 3 minutes by using a heat blower curing system and/or alternatively a maximum curing temperature of 80°C for a time equal to or lower than 3 hours by using an oven, guarantee the following requirements for the elastomeric glue of the present invention:

- resistance to stress;
- high chemical resistance to both water and solvent based inks;
- high crosslinking density;
- high conversion degree (% carbon-sulfur bond formation or C-H bond disappearing);
- high adhesion to the surfaces to be bonded (silicon, or polyolefin based plastic);
- good flexibility;
- good dispensability and scorch time; and
- reduced air permeability.

The detailed description regarding these advantageous properties will be given in the following by means of experimental tests and/or analysis of the material.

**Resistance to stress**

The elastomeric glue of the present invention is able to absorb the stress induced by the manufacturing process preserving the final printhead from cracks of the chip during and after the manufacturing process. An eventual heating of the printhead during its life induces different expansions of the bonded parts (e.g., silicon and plastic reservoir) due to the different thermal dilatation coefficients. This mismatch induces a bending effect of the chip and consequently induces fracture of the brittle silicon, rendering the printhead unusable. However, the elasticity of the elastomeric glue of the present invention guarantees the adsorption of the stresses to the printhead induced by the manufacturing process or occurring during the shelf life.

**Chemical resistance to solvent based inks**

Once the printhead manufacturing process is concluded, the ink/s is/are loaded into the reservoir/s. If the printhead is a trichrome one, three inks (typically Cyan, Magenta, Yellow) are loaded into the three reservoirs. In general, each reservoir must contain an ink.

When the printheads filled with the inks are ready, they are put into their packaging and into an oven set at 45°C for 1 week, 3 weeks, 5 weeks and 7 weeks for each steps of the storage time, the samples are removed from the oven and cooled at room temperature for 2 hours. The packaging is opened and the printhead is positioned into a printer, executing a predefined printing pattern on a paper sheet; looking at the printing pattern it is possible to verify if some failures of the hydraulic glue occurs during the storage. If some contamination inks print is observed in the technical pattern, the glue's chemical resistance is not considered sufficient.

The elastomeric glue of the present invention is formulated in order to be compatible, once vulcanized, to solvent based inks used in the inkjet printhead. These solvent based inks normally contain alcohols, glycols, glycoethers, ethers, esters, hydrocarbons, amide, lactones, ketones. The elastomeric glue of the present invention contains components which are able to impart the polymer high adhesion to the back of the silicon chip of the printhead and components which are able to bond the plastic of the reservoir which is generally polyolefin based in order to be compatible to the solvent based inks.

In the present invention, to evaluate the chemical compatibility (or saying, chemical resistance) between the elastomeric glue of the present invention and the commonly-used solvent based inks, solvent based inks Cyan, Magenta and Yellow were used. The ink compositions are listed in Table 2.

Table 2. Compositions of solvent based inks Cyan, Magenta and Yellow

| | **cyan** | | | | **magenta** | | **yellow** | |
|---|---|---|---|---|---|---|---|---|
| | **O** | **M** | **T3** | **S1** | **MT12*** | **MT14** | **YT12*** | **YTF21** |
| **Raw materials** | **%** | **%** | **%** | **%** | **%** | **%** | **%** | **%** |
| Solvent Blue 44 | 4 | 4 | 5 | 5 | | | | |
| Solvent Red 125 | | | | | 4.5 | 4.5 | | |
| Solvent yellow 88 | | | | | | | 5 | 4 |
| Dowanol PM | 5 | | | | | | 5 | |
| Dowanol DPM | 5 | 10 | | | 5 | | 5 | |
| DMI | 2.9 | 2.9 | | | | | | |

(continued)

| | cyan | | | | magenta | | yellow | |
|---|---|---|---|---|---|---|---|---|
| | O | M | T3 | S1 | MT12* | MT14 | YT12* | YTF21 |
| **Raw materials** | % | % | % | % | % | % | % | % |
| 1-Octyl-2-Pyrrolidone | 10 | 10 | | | 10 | 20 | 10 | 20 |
| Cyclohexanone | 20 | | | | | | | |
| Mesitylene | | 10 | | | | | | |
| Dioxolane | | 10 | | | | | | |
| Acetophenone | | | | 50 | 45 | | 40 | |
| Ethylbenzoate | | | 20 | | | | | |
| Cyclohexanol | | | 10 | 10 | | 15 | | |
| DMSO | | | 10 | | 20 | | 20 | 15 |
| Byk 3441 | 0.4 | 0.4 | 0.4 | 0.4 | 0.3 | | 0.3 | |
| Bis-2-ethyl hexyl phosphate | 1 | 1 | 1 | 1 | 1 | | 1 | |
| IPA | | | | | | | | 5 |
| Ethanol | 51.7 | 51.7 | 53.6 | 33.6 | 14.2 | 60.5 | 13.7 | 56.5 |

Three reservoirs of the printhead were respectively filled with the above solvent based inks and kept for 7 weeks at 45°C, and the chemical compatibility was evaluated by observing after 1, 3, 5 and 7 weeks eventual failures of the bonded parts (hydraulic, plugs, bead on board) of the printhead. The glues of the present invention which were properly cured did not exhibit any detachment from the surfaces and/or relevant swelling.

The chemical resistance of the printhead, and particularly of the hydraulic glues, was positively evaluated by observing their printing quality after 1, 3, 5 and 7 weeks of storage at 45°C. Typically, a glue failure is highlighted when observing an unusual color of the printing pattern on the paper; this is consequence of the mixing of the inks into the macrohydraulic area of the printhead. Another possible defect is the lack of nozzles during the printing process as a consequence of the loss of tightness of the hydraulic of the printhead.

Table 3 illustrates the printing quality of the printhead using the glues of E1-E4 and C5-C6 at time 0 and after 1, 3, 5 and 7 weeks of storage at 45°C.

Table 3. The printing quality of the printheads with different elastomeric glues

| | Time=0 | Time=1 wk | Time=3 wks | Time=5 wks | Time=7 wks | Chemical resistance |
|---|---|---|---|---|---|---|
| E1 | OK | OK | OK | OK | OK | good |
| E2 | OK | OK | OK | OK | OK | good |
| E3 | OK | OK | OK | OK | OK | good |
| E4 | OK | OK | OK | OK | OK | good |
| C5 | OK | OK | OK | KO | KO | Medium |
| C6 | Not tested | | | | | Medium |

The above results in Table 3 show that the printing quality of the printhead is good for E1 to E4, while negative for C5 after 5 weeks and 7 weeks. Thus, the chemical resistance for the elastomeric glues of present invention is good, whereas for the comparative examples C5 and C6, the chemical resistance is medium.

**Crosslinking density**

In the present invention, the crosslinking density of the elastomeric glues of the present invention and the comparative examples, once cured, was measured following this procedure.

Rubber specimens were prepared by casting the glue inside of an aluminum mold having the following 3

dimensions: 10 mm x 20 mm x 20 mm.

The specimen was cured with the proper desired curing conditions (heat blower and/or oven), and after cooling and weight and volume measurement, the specimen was put in a known volume of isooctane at room temperature.

This organic solvent (isooctane) has a very high affinity to the polymeric matrix of the elastomeric glue, and consequently it induces swelling. After 2 minutes the specimen was then removed from the solvent and measured in terms of the final weight and volume.

Using the following Flory Rehner equations, the crosslinking density of the glue specimen was then calculated:

$$v = -\frac{1}{2V_s}\,\frac{ln(1-v_r)+v_r+\chi v_r^2}{v_r^{1/3}-v_r/2}$$

Note: For tetra-functional network

**v = Crosslink density mol per unit volume (mol/cm$^3$)**
**$V_r$ = Volume fraction of rubber in equilibrium swollen vulcanised rubber sample**
**$V_s$ = Mole volume of used solvent at room temperature in cm$^3$/mol (from molecular weight and density)**
**$\chi$ = Flor$\gamma$-Huggins polymer-solvent interaction parameter.**

For vulcanized rubber containing filler, $V_r$, is obtained from the following equation:

$$\frac{v_r}{v_{rf}} = 1 - \left\{3c\left[1 - v_r^{1/3}\right] + v_r - 1\right\}\frac{\phi}{1-\phi}$$

**$V_{rf}$ = the volume fraction of filled rubber in swollen gel,**
**$\phi$ = the volume fraction of filler in the unswollen filled rubber,**
***c* = the filler rubber interaction parameter.**

Table 4 illustrates the crosslinking densities of the elastomeric glues of the present invention and the comparative examples. The crosslinking density calculated on the most promising glues was to the order of $10^{-3}$ mol/cm$^3$. For both comparative examples C5 and C6, no crosslinking density is obtained due to the difficulty of preparing the specimen.

Table 4. Properties of the different elastomeric glues.

| GLUEs | Cross-linking density (mol/cc) | Absorbance Signal Increase | Adhesion on silicon chip | Adhesion on polyolefin reservoir (Valox) |
|---|---|---|---|---|
| **E1** | $1.6*10^{-3}$ | 0.4 | Very good | Medium |
| **E2** | $1.9*10^{-3}$ | 0.4 | Very good | good |
| **E3** | $1.75*10^{-3}$ | > 0.4 | Very good | good |
| **E4** | $1.75*10^{-3}$ | > 0.4 | Very good | good |
| **C5** | Specimen difficult to prepare | 0.14 | Very good | good |
| **C6** | Specimen difficult to prepare | 0.30 | Very good | good |

**Conversion degree**

In the context of the present invention, the conversion degree of the glue means the percentage of carbon-sulfur (C-S) bond formation or C-H bond disappearing. The conversion degree of the glue, once cured, was measured by FTIR spectroscopic analysis.

The vulcanization reaction involves a certain number of reaction steps that are difficult to monitor by FTIR. However, with the FTIR spectroscopic technique it has been observed that it is possible to get a satisfying detection of the reaction only by observing the appearing or disappearing respectively of C-S and C-H bonds.

Monitoring the increasing of the signal at 1520 $cm^{-1}$ normalized on the reference peak at 1603 $cm^{-1}$, it has been observed that the elastomeric glues of the present invention have an increase of the absorbance value of at least 0.4, as listed in Table 4. For comparative examples C5 and C6, the increase of the absorbance values are 0.14 and 0.30, respectively, significantly lower than the values of the present invention (E1-E4).

## Adhesion to the surfaces to be bonded

The adhesion to the surfaces (both silicon and polyolefin based plastic) of the elastomeric glues were tested by preparing at least ten printheads where the elastomeric glues were under testing. The glues were dispensed by the cochlea or pneumatic dispensing systems equipped on the manufacturing assembly lines and cured with the proper selected conditions identified with analysis.

The adhesion of the glue was evaluated with the "knife test". After the glue dispensing and the correct curing time, the chip was observed to determine whether it maintains its position.

Particularly, the "knife test" was carried out in the following modality:

- removing the flexible circuit (or flat) from the printhead;
- placing the tip of the knife on the edge of the chip and making leverage pressing with a soft force;
- if the force impress causes a chip removing, the evaluation test is negative with rank "KO"; it is possible to observe the complete removing of the chip with the sticking glue on his backside; and
- if the force impress causes a breaking of the chip, or it is difficult to remove the chip, the evaluation test is positive, and the rank test is "good" or "very good".

As listed in Table 4, all the examples of the present invention and the comparative examples show acceptable adhesion, ranging the "medium" level to the "very good".

## Flexibility

Normally, the flexibility or saying the glass transition temperatures of polymeric materials are measured indirectly by means of DSC technique executing a heating ramp at an established heating rate in a temperature range comprised between room temperature and a higher temperature. If the material is rubbery at room temperature, it will not exhibit any glass transition in the detected temperature range. An adhesive having a glass transition temperature under the room temperature is inherently free volume rich inside of the macromolecular structure. Thermal dilatation of the bonded surfaces during or after the manufacturing process, vibrations, etc. is consequently adsorbed by the material.

However, as the glass transition temperatures of the elastomeric glues E1-E4 according to the present invention are considerably below zero degrees Celsius, precise values obtained with the DSC instrument (which has a lower accuracy at cold temperatures of less than 0°C) suffer from high instrumental errors. Thus, in the present application, the glass transition temperatures of the elastomeric glues E1-E4 and C5 and C6 were evaluated by introducing the glues in a refrigerator at -45°C and indenting the same with a tip of knife. It was observed that none of the glues was in a glassy state and all the glues are always flexible till to the lowest -40°C. As can be seen, the glass transition temperatures of the elastomeric glues E1-E4 are all not higher than -30°C.

## Air permeability

The printing and storage tests executed on the printheads have not highlighted air permeation of the elastomeric glue used to bond the parts of the printhead, once dispensed and cured properly.

The presence of air into the microhydraulic of the printhead is critical and may cause lack of nozzles during the life of the device.

Various technical features described above may be combined arbitrarily. Although not all of possible combinations of various technical features are described, but all the combinations of these technical features should be regarded as within the scope described in the present specification provided that they do not conflict.

Notwithstanding the description of the invention in combination with embodiments, those skilled in the art shall understand that the above description and drawings are only illustrative and not restrictive and the invention is not limited to the embodiments disclosed. Various modifications and variations are possible without departing from the concept of the invention.

## Claims

1. A method of preparing an elastomeric glue for bonding parts inside an inkjet printhead from a composition comprising:

   linear, unsaturated hydrocarbon based polymers comprising at least one non-aromatic unsaturation in at least one monomer, wherein the linear, unsaturated hydrocarbon based polymers comprise polyisoprene graft maleic anhydride and polybutadiene-styrene;
   one or more sulfur donor molecules; and
   an organometallic zinc catalyst;

   the method comprising the steps of:

   a) reacting the one or more sulfur donor molecules with the organometallic zinc catalyst to form a first sulfurized zinc complex as an active cross-linking initiator;
   b) catalyzing vulcanization reaction of the one or more linear, unsaturated hydrocarbon based polymers with the first sulfurized zinc complex to obtain vulcanized polymers and thiols;
   c) crosslinking the polymeric chains of the vulcanized polymers obtained in step b) via polysulfidic bridges between units through a curing, preferably thermocuring, process.

2. The method according to claim 1, wherein the composition comprises:

   - 15%-60% of the linear, unsaturated hydrocarbon based polymers;
   - 3.3%-10.6% of the one or more sulfur donor molecules; and
   - 2.0%-7.0% of the organometallic zinc catalyst;

   wherein the percentage is calculated based on the total weight of the composition.

3. The method according to any one of claims 1-2, wherein the linear, unsaturated hydrocarbon based polymers comprise one of the following:

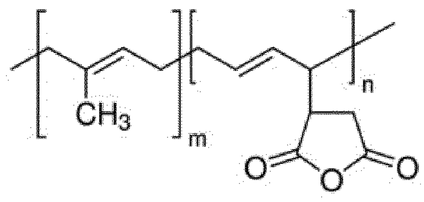
,

wherein m + n is equal to 113, and none of m and n is equal to zero,

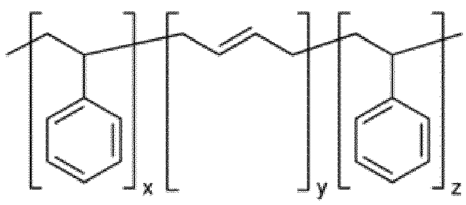
,

wherein (x + z) / (x + y + z) is equal to 20% and y / (x + y + z) is equal to 80%, and

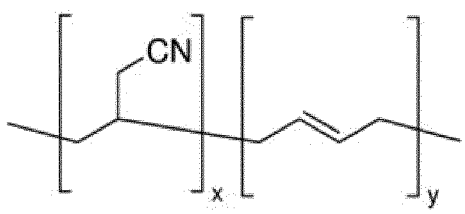
,

wherein x / (x + y) is equal to 33% and y / (x + y) is equal to 67%.

**4.** The method according to any one of claims 1-3, wherein the one or more sulfur donor molecules are selected from elementary sulfur or dispersed sulfur, and preferably a soluble crystalline sulfur having average granulometry not larger than 100 mesh.

**5.** The method according to any one of claims 1-4, wherein the organometallic zinc catalyst is selected from the group comprising

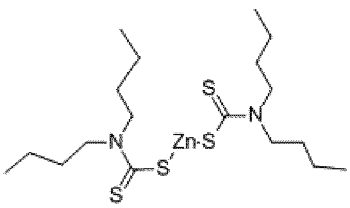
,
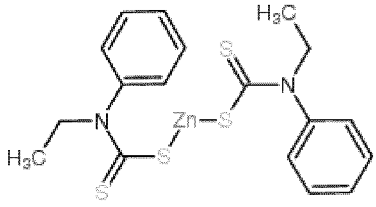
and
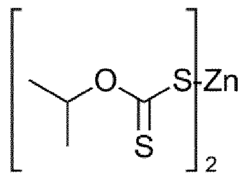
.

**6.** The method according to any one of claims 1-4, wherein the organometallic zinc catalyst is selected from the group comprising zinc ethyl phenyl dithiocarbamate (ZEPC), zinc dibutyl dithiocarbamate (ZDBC), zinc guanidines, and/or zinc isopropyl xanthates.

**7.** The method according to any one of claims 1-6, wherein the composition further comprises:

- metal oxides, and preferably zinc oxide;
- one or more organic ligands selected from C18-C30 carboxylic acids, aliphatic amines or aromatic amines;
- one or more hydrocarbon-based organic solvents or oils having a boiling point not lower than the curing temperature of the composition;
- a coupling agent of organosilane molecules having one or more unsaturation; and/or
- an organic or inorganic filler dispersible in the composition, and further having gas and solvent barrier properties and an average granulometry not larger than 50 microns, preferably a lamellar talc filler.

**8.** The method according to claim 7, wherein the composition comprises:

- 1.9%-6.2% of the metal oxides;
- 2.5%-8.5% of the one or more organic ligands;
- 14%-45% of the one or more hydrocarbon-based organic solvents or oils;
- 2.5%-9.0% of the coupling agent; and/or
- 1.5%-12% of the organic or inorganic filler;

wherein the percentage is calculated based on the total weight of the composition.

**9.** The method according to any one of claims 7-8, wherein the one or more organic ligands are selected from the group comprising

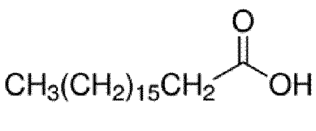
,
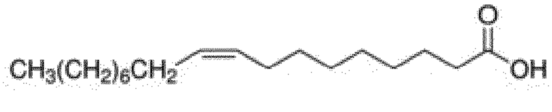
, and
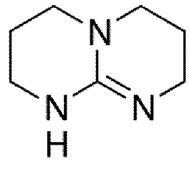
.

**10.** The method according to any one of claims 7-9, wherein the coupling agent is selected from the group comprising:

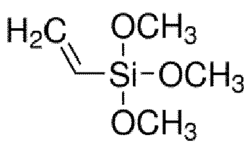 , 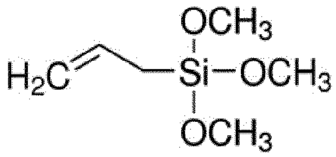 and 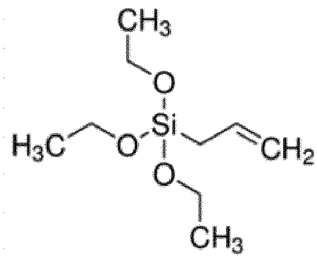 .

**11.** The method according to claim 7, wherein the method further comprises the step of d) reacting the metal oxides such as zinc oxide with thiols obtained in step b) to form a zinc complex, preferably wherein the zinc complex is complexed with the one or more organic ligands and then sulfurized to obtain a second sulfurized zinc complex.

**12.** The method according to any of claims 1-11, wherein the method further comprises the step of e) desulfurizing the polysulfidic bridges by the organometallic zinc catalyst.

**13.** The method according to any of claims 1-12, wherein the method further comprises the step of f) vulcanizing the coupling agent having one or more unsaturation to participate in the step c).

**14.** An elastomeric glue prepared by the method according to any one of claims 1-13.

**15.** An inkjet printhead, comprising the elastomeric glue prepared by the method according to any one of claims 1-13.

**16.** Use of the elastomeric glue prepared by the method according to any one of claims 1-13 for bonding parts inside an inkjet printhead.

**Patentansprüche**

**1.** Verfahren zur Herstellung eines elastomeren Klebstoffs zum Verkleben von Teilen in einem Tintenstrahldruckkopf aus einer Zusammensetzung, die aufweist:

lineare, ungesättigte Polymere auf Kohlenwasserstoffbasis, die mindestens eine nichtharomatische ungesättigte Stelle in mindestens einem Monomer aufweisen, wobei die linearen, ungesättigten Polymere auf Kohlenwasserstoffbasis Polyisopren-Pfropf-Maleinsäureanhydrid und Polybutadien-Styrol aufweisen;
ein oder mehrere Schwefelspender-Moleküle; und
einen metallorganischen Zinkkatalysator;

wobei das Verfahren die Schritte aufweist:

a) Umsetzen eines oder mehrerer Schwefelspender-Moleküle mit dem metallorganischen Zinkkatalysator zur Bildung eines ersten geschwefelten Zinkkomplexes als aktiver Vernetzungsinitiator;
b) Katalysieren der Vulkanisierungsreaktion des einen oder der mehreren linearen, ungesättigten Polymere auf Kohlenwasserstoffbasis mit dem ersten geschwefelten Zinkkomplex, um vulkanisierte Polymere und Thiole zu erhalten;
c) Vernetzen der Polymerketten der in Schritt b) erhaltenen vulkanisierten Polymere über Polysulfidbrücken zwischen den Einheiten durch einen Aushärtungsprozess, vorzugsweise einen thermischen Aushärtungsprozess.

**2.** Verfahren nach Anspruch 1, wobei die Zusammensetzung aufweist:

- 15%-60% der linearen, ungesättigten Polymere auf Kohlenwasserstoffbasis;
- 3,3%-10,6% eines oder mehrerer Schwefelspender-Moleküle; und
- 2,0%-7,0% des metallorganischen Zinkkatalysators;

wobei der Prozentsatz auf der Grundlage des Gesamtgewichts der Zusammensetzung berechnet wird.

**3.** Verfahren nach einem der Ansprüche 1-2, wobei die linearen, ungesättigten Polymere auf Kohlenwasserstoffbasis eines der folgenden aufweisen:

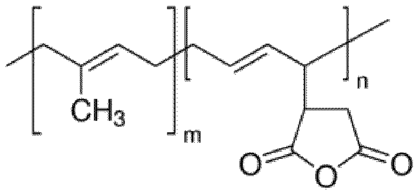,

wobei m + n gleich 113 ist und weder m noch n gleich null ist,

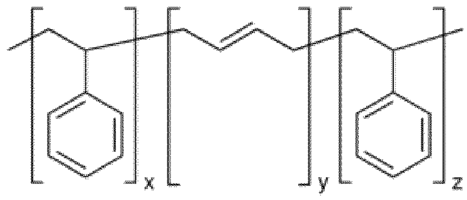,

wobei (x + z) / (x + y + z) gleich 20% ist und y / (x + y + z) gleich 80% ist, und

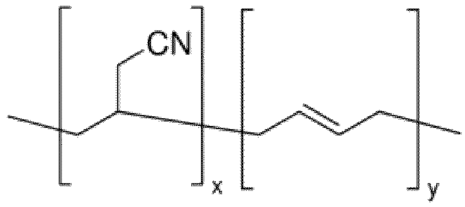,

wobei x / (x + y) gleich 33% ist und y / (x + y) gleich 67% ist.

**4.** Verfahren nach einem der Ansprüche 1-3, wobei das eine oder die mehreren Schwefelspender-Moleküle aus elementarem Schwefel oder dispergiertem Schwefel und vorzugsweise einem löslichen kristallinen Schwefel mit einer durchschnittlichen Granulometrie von nicht mehr als 100 mesh ausgewählt sind.

**5.** Verfahren nach einem der Ansprüche 1-4, wobei der metallorganische Zinkkatalysator aus der Gruppe ausgewählt ist, die aufweist:

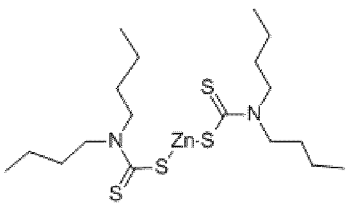, 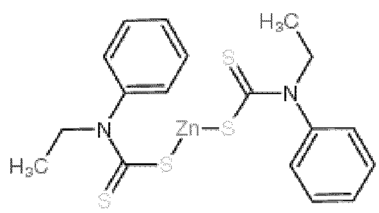 und 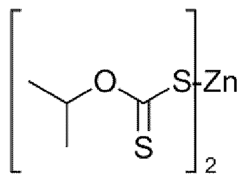.

**6.** Verfahren nach einem der Ansprüche 1-4, wobei der metallorganische Zinkkatalysator aus der Gruppe ausgewählt ist, die Zinkethylphenyldithiocarbamat (ZEPC), Zinkdibutyldithiocarbamat (ZDBC), Zinkguanidine und/oder Zinkisopropylxanthate aufweist.

**7.** Verfahren nach einem der Ansprüche 1-6, wobei die Zusammensetzung ferner aufweist:

- Metalloxide, vorzugsweise Zinkoxid;
- einen oder mehrere organische Liganden, die aus C18-C30-Carbonsäuren, aliphatischen Aminen oder aromatischen Aminen ausgewählt sind;

- ein oder mehrere organische Lösungsmittel oder Öle auf Kohlenwasserstoffbasis mit einem Siedepunkt, der nicht niedriger ist als die Aushärtungstemperatur der Zusammensetzung;
- ein Kopplungsmittel von Organosilanmolekülen mit einer oder mehreren ungesättigten Stellen; und/oder
- einen organischen oder anorganischen Füllstoff, der in der Zusammensetzung dispergierbar ist und ferner Gas- und Lösungsmittelbarriereeigenschaften und eine durchschnittliche Granulometrie von nicht mehr als 50 Mikrometern aufweist, vorzugsweise einen lamellaren Talkfüllstoff.

**8.** Verfahren nach Anspruch 7, wobei die Zusammensetzung aufweist:

- 1,9%-6,2% der Metalloxide;
- 2,5%-8,5% eines oder mehrerer organischer Liganden;
- 14%-45% eines oder mehrerer organischer Lösungsmittel oder Öle auf Kohlenwasserstoffbasis;
- 2,5%-9,0% des Kopplungsmittels; und/oder
- 1,5%-12% des organischen oder anorganischen Füllstoffs;

wobei der Prozentsatz auf der Grundlage des Gesamtgewichts der Zusammensetzung berechnet wird.

**9.** Verfahren nach einem der Ansprüche 7-8, wobei der eine oder die mehreren organischen Liganden aus der Gruppe ausgewählt sind, die aufweist:

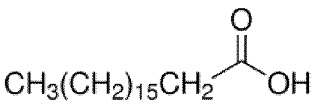 , 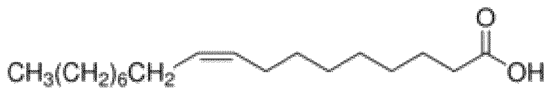 und 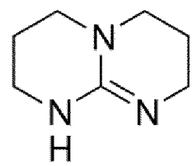 .

**10.** Verfahren nach einem der Ansprüche 7-9, wobei das Kopplungsmittel aus der Gruppe ausgewählt ist, die aufweist:

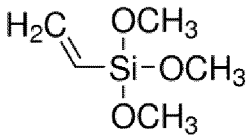 , 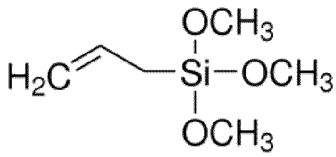 und 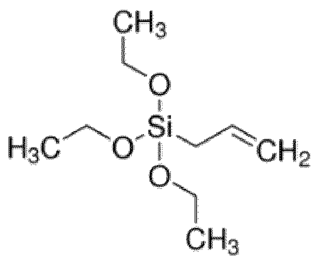 .

**11.** Verfahren nach Anspruch 7, wobei das Verfahren ferner den Schritt d) der Umsetzung der Metalloxide, wie Zinkoxid, mit den in Schritt b) erhaltenen Thiolen zur Bildung eines Zinkkomplexes aufweist, vorzugsweise wobei der Zinkkomplex mit einem oder mehreren organischen Liganden komplexiert und dann geschwefelt wird, um einen zweiten geschwefelten Zinkkomplex zu erhalten.

**12.** Verfahren nach einem der Ansprüche 1-11, wobei das Verfahren ferner den Schritt e) der Entschwefelung der Polysulfidbrücken durch den metallorganischen Zinkkatalysator aufweist.

**13.** Verfahren nach einem der Ansprüche 1-12, wobei das Verfahren ferner den Schritt f) des Vulkanisierens des Kopplungsmittels mit einer oder mehreren ungesättigten Stellen zur Teilnahme am Schritt c) aufweist.

**14.** Elastomerer Klebstoff, der nach dem Verfahren nach einem der Ansprüche 1-13 hergestellt wird.

**15.** Tintenstrahldruckkopf, der den elastomeren Klebstoff aufweist, der durch das Verfahren nach einem der Ansprüche 1-13 hergestellt wird.

**16.** Verwendung des elastomeren Klebstoffs, der durch das Verfahren nach einem der Ansprüche 1-13 hergestellt wird, zum Verkleben von Teilen in einem Tintenstrahldruckkopf.

## Revendications

**1.** Procédé de préparation d'une colle élastomère permettant de coller des pièces à l'intérieur d'une tête d'impression à jet d'encre à partir d'une composition comprenant :

des polymères à base d'hydrocarbures insaturés linéaires, comprenant au moins une insaturation non aromatique dans au moins un monomère, les polymères à base d'hydrocarbures insaturés linéaires comprenant du polyisoprène-greffé-anhydride maléique et du polybutadiène-styrène ;
une ou plusieurs molécules donneuses de soufre ; et
un catalyseur de zinc organométallique ;

le procédé comprenant les étapes consistant à :

a) faire réagir les une ou plusieurs molécules donneuses de soufre avec le catalyseur de zinc organométallique pour former un premier complexe de zinc sulfuré comme initiateur de réticulation actif ;
b) catalyser la réaction de vulcanisation des un ou plusieurs polymères à base d'hydrocarbures insaturés linéaires avec le premier complexe de zinc sulfuré pour obtenir des polymères vulcanisés et des thiols ;
c) réticuler les chaînes polymères des polymères vulcanisés obtenus à l'étape b) par le biais de ponts polysulfurés entre unités à travers un procédé de durcissement, de préférence de thermodurcissement.

**2.** Procédé selon la revendication 1, dans lequel la composition comprend :

- 15 % à 60 % des polymères à base d'hydrocarbures insaturés linéaires ;
- 3,3 % à 10,6 % des une ou plusieurs molécules donneuses de soufre ; et
- 2,0 % à 7,0 % du catalyseur de zinc organométallique ;

dans lequel le pourcentage est calculé sur la base du poids total de la composition.

**3.** Procédé selon l'une quelconque des revendications 1 à 2, dans lequel les polymères à base d'hydrocarbures insaturés linéaires comprennent l'un des éléments suivants :

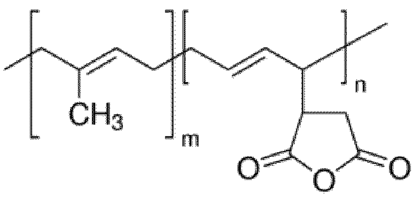
,

où m + n est égal à 113, et aucun de m et n n'est égal à zéro,

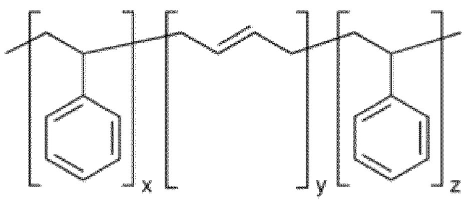

où (x + z) / (x + y + z) est égal à 20 % et y / (x + y + z) est égal à 80 %, et

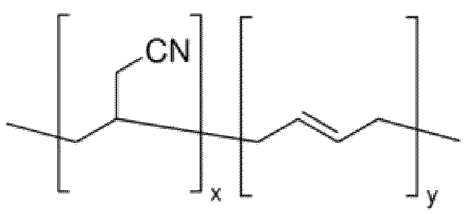

où x / (x + y) est égal à 33 % et y / (x + y) est égal à 67 %.

4. Procédé selon l'une quelconque des revendications 1 à 3, dans lequel les unes ou plusieurs molécules donneuses de soufre sont choisies parmi le soufre élémentaire ou le soufre dispersé, et de préférence un soufre cristallin soluble ayant une granulométrie moyenne qui ne dépasse pas 100 mesh.

5. Procédé selon l'une quelconque des revendications 1 à 4, dans lequel le catalyseur de zinc organométallique est choisi dans le groupe comprenant

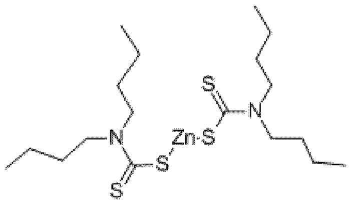 , 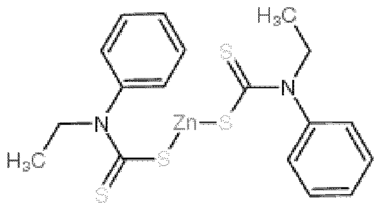 et 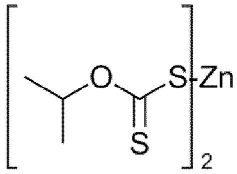 .

6. Procédé selon l'une quelconque des revendications 1 à 4, dans lequel le catalyseur de zinc organométallique est choisi dans le groupe comprenant le dithiocarbamate d'éthylphényle de zinc (ZEPC), le dithiocarbamate de dibutyle de zinc (ZDBC), les guanidines de zinc et/ou les xanthates d'isopropyle de zinc.

7. Procédé selon l'une quelconque des revendications 1 à 6, dans lequel la composition comprend en outre :

- des oxydes métalliques, et de préférence de l'oxyde de zinc ;
- un ou plusieurs ligands organiques choisis parmi des acides carboxyliques en C18-C30, des amines aliphatiques ou des amines aromatiques ;
- un ou plusieurs solvants ou huiles organiques à base d'hydrocarbures présentant un point d'ébullition qui n'est pas inférieur à la température de durcissement de la composition ;
- un agent de couplage de molécules d'organosilane ayant une ou plusieurs insaturations ; et/ou
- une charge organique ou inorganique dispersible dans la composition, et présentant en outre des propriétés de barrière au gaz et aux solvants et une granulométrie moyenne ne dépassant pas 50 microns, de préférence une charge de talc lamellaire.

8. Procédé selon la revendication 7, dans lequel la composition comprend :

- 1,9 % à 6,2 % des oxydes métalliques ;
- 2,5 % à 8,5 % des un ou plusieurs ligands organiques ;
- 14 % à 45 % des un ou plusieurs solvants ou huiles organiques à base d'hydrocarbures ;
- 2,5 % à 9,0 % de l'agent de couplage ; et/ou
- 1,5 % à 12 % de la charge organique ou inorganique ;

dans lequel le pourcentage est calculé sur la base du poids total de la composition.

9. Procédé selon l'une quelconque des revendications 7à 8, dans lequel les un ou plusieurs ligands organiques sont choisis dans le groupe comprenant

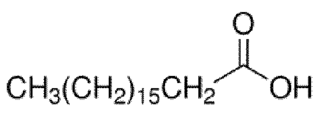 , 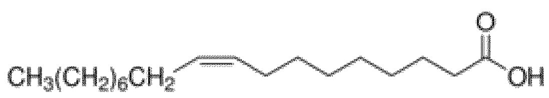 et 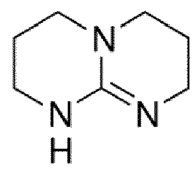 .

10. Procédé selon l'une quelconque des revendications 7à 9, dans lequel l'agent de couplage est choisi dans le groupe comprenant :

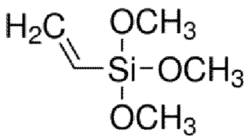, 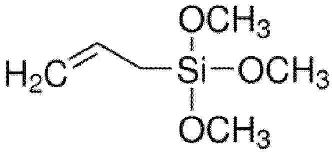 et 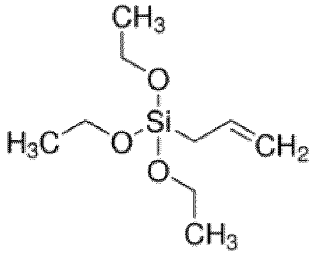.

**11.** Procédé selon la revendication 7, dans lequel le procédé comprend en outre l'étape consistant à d) faire réagir les oxydes métalliques comme l'oxyde de zinc avec des thiols obtenus à l'étape b) pour former un complexe de zinc, de préférence dans lequel le complexe de zinc est complexé avec les un ou plusieurs ligands organiques, puis sulfuré pour obtenir un second complexe de zinc sulfuré.

**12.** Procédé selon l'une quelconque des revendications 1 à 11, dans lequel le procédé comprend en outre l'étape consistant à e) désulfurer les ponts polysulfurés avec le catalyseur de zinc organométallique.

**13.** Procédé selon l'une quelconque des revendications 1 à 12, dans lequel le procédé comprend en outre l'étape consistant à f) vulcaniser l'agent de couplage ayant une ou plusieurs insaturations pour participer à l'étape c).

**14.** Colle élastomère préparée par le procédé selon l'une quelconque des revendications 1 à 13.

**15.** Tête d'impression à jet d'encre, comprenant la colle élastomère préparée par le procédé selon l'une quelconque des revendications 1 à 13.

**16.** Utilisation de la colle élastomère préparée par le procédé selon l'une quelconque des revendications 1 à 13 pour coller des pièces à l'intérieur d'une tête d'impression à jet d'encre.

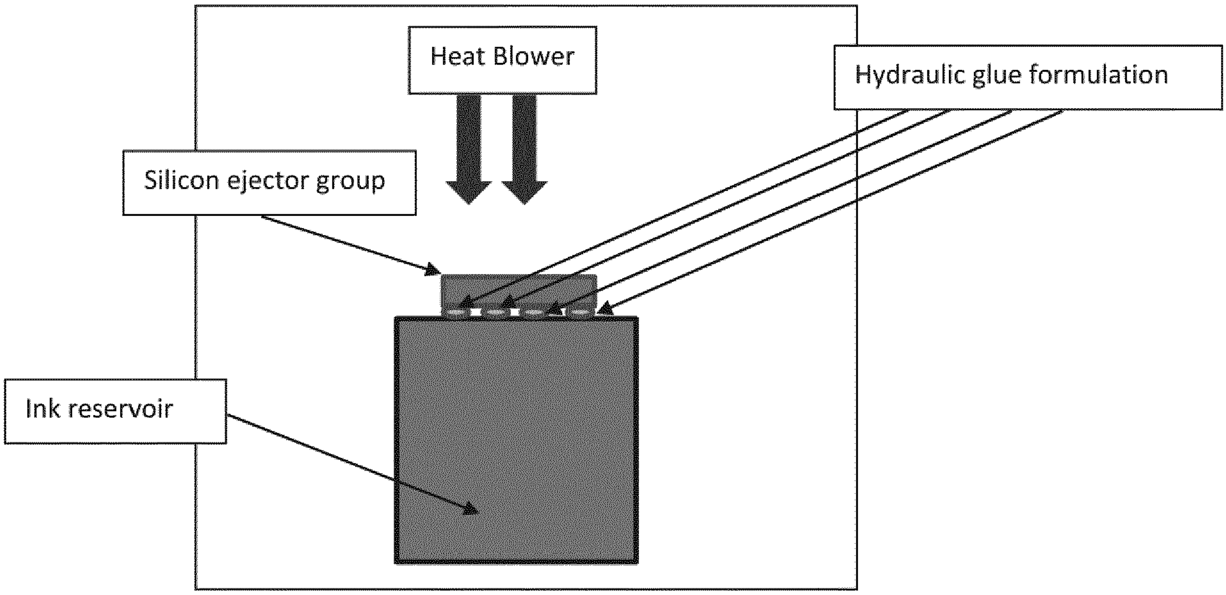
Heat Blower
Hydraulic glue formulation
Silicon ejector group
Ink reservoir

Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1896262 B1
- US 2017174001 A1